# EUROPEAN PATENT APPLICATION

(11) **EP 1 892 779 A1**
(43) Date of publication of application: **27.02.2008**
(21) Application number: 06741823.6
(22) Date of filing: 09.05.2006
(51) Int. Cl.: H01M 2/38, H01M 2/08, H01M 10/38

(54) **COVER PLATE ASSEMBLY FOR LITHIUM ION BATTERY, BATTERY CASE AND BATTERY USING the SAME**

(30) Priority: 17.06.2005 CN 200520034561 U
(71) Applicant: Shenzhen Bak Battery Co., Ltd, Longgang District Shenzhen Guangdong 518119 (CN)
(72) Inventor: ZHAO, Junfeng, Shenzhen, Guangdong 518119 (CN)
(74) Representative: Ketelaars, Maarten F.J.M.
(86) International application number: PCT/CN2006/000930
(87) International publication number: WO 2006/133618

(57) **Abstract**

The present invention discloses a cover plate for a lithium ion battery. The cover plate includes a cover body and a sealing piece. The cover body is provided with an infusion hole. At least part of the sealing piece is located inside the infusion hole and fitted tightly with the infusion hole for sealing it. The sealing piece has a flange, which extends outside the infusion hole and limits depth of the sealing piece into the infusion hole. The present invention also discloses a battery case and a lithium ion battery provided with the above-mentioned battery cover plate. The present invention has the following beneficial technical effect: With the flange provided on the sealing piece, it is easy to control depth of the sealing piece into the infusion hole during punching and sealing, thus avoiding a bad sealing problem in the prior packaging technology resulted from punching too shallow or too deep.

## Description

### FIELD OF THE INVENTION

The present invention relates to packaging technology of a lithium ion battery, and more particularly to a cover plate for the lithium ion battery, a battery case and the battery using the same.

### BACKGROUND OF THE INVENTION

A lithium ion battery is a high-capacity and high-power battery mainly applied in a small facility, especially in a mobile phone. The lithium ion battery is generally composed of a cover plate assembly for the battery, a battery bottle, an electrolyte, and a battery roll core from winding of a positive pole piece, an anode pole piece and a diaphragm paper roll. Following steps are usually adopted in the prior packaging technology of the lithium ion battery: First put the wound battery roll core into the battery bottle; then weld a connection tape for the positive and negative pole pieces onto the cover plate assembly; then weld the cover plate at opening part of the battery bottle by laser welding for sealing, thus forming a container containing the battery roll core; then infuse the electrolyte into the container through an infusion hole on the cover plate; and finally seal the infusion hole. Currently, sealing of the infusion hole is realized by punching a steel ball into the infusion hole to produce an interference fit with the infusion hole.

A leakage tends to happen resulted from bad sealing, because there is a higher requirement for accuracy of depth of the steel ball imbedded into the infusion hole, while the depth of the steel ball during being punched is not easy to be controlled, sometimes shallow and sometimes deep; moreover, the steel ball is a solid rigid part, and further has the interference fit with the infusion hole, which requires a higher pressure for punching the steel ball for sealing and may cause distortion of the battery case.

### CONTENTS OF THE INVENTION

The purpose of the present invention is to provide a cover plate for a lithium ion battery, a battery case and the battery using the same, with which it is easy to control depth of a sealing piece into the infusion hole and effective to improve the sealing effect.

In order to attain the above-mentioned purpose, a technical solution of the present invention is as below:

The present invention provides a cover plate for a lithium ion battery. The cover plate includes a cover body and a sealing piece. The cover body is provided with an infusion hole. At least part of the sealing piece is located inside the infusion hole and fitted tightly with the infusion hole for sealing it. The sealing piece has a flange, which extends outside the infusion hole and limits depth of the sealing piece into the infusion hole.

The present invention provides a case for the lithium ion battery. The battery case includes a battery bottle and a battery cover plate for sealing its opening. The battery cover plate includes the cover body and the sealing piece. The cover body is provided with the infusion hole. At least part of the sealing piece is located inside the infusion hole and fitted tightly with the infusion hole for sealing it. The sealing piece has the flange, which extends outside the infusion hole and limits depth of the sealing piece into the infusion hole.

The present invention provides a lithium ion battery. The battery includes the battery cover plate. The battery cover plate further includes the cover body and the sealing piece. The cover body is provided with the infusion hole. At least part of the sealing piece is located inside the infusion hole and fitted tightly with the infusion hole for sealing it. The sealing piece has the flange, which extends outside the infusion hole and limits depth of the sealing piece into the infusion hole.

Preferably, the sealing piece has a hollow structure with a closed bottom and an open top, and the flange located on circumference of the open top of the sealing piece is a sealing ring all extending outward along the circumference. More preferably, the sealing piece has a spherical bottom structure.

Preferably, the flange is at least two convexes, which are positioned at sides of the sealing piece symmetrically or asymmetrically and on the same horizontal plane.

Preferably, the sealing piece has a solid pole form, and the flange is a cap located on its top. The cap can have either a camber or a flat structure.

Further preferably, the infusion hole is of a counterbore type, and includes a straight hole at the lower part and a countersunk head at the upper part; and lower part of the sealing piece is located in the straight hole, and its flange in the countersunk head.

More preferably, the flange has an exterior circumference whose diameter is bigger than internal diameter of the countersunk head, and is tightly locked in the countersunk head.

The present invention has the following beneficial technical effects by adopting the above-mentioned technical solution in combination with embodiments to be described in detail below: 1) With the flange provided on the sealing piece, it is very easy to control depth of the sealing piece into the infusion hole during punching and sealing, thus thoroughly avoiding the long-existing technical problems with the steel ball sealing, i.e. difficulty in operation (diameter of the sealing ball is very small, about 1 mm or so) and bad sealing due to punching too shallow or too deep. 2) The hollow sealing piece with the closed bottom has a lower need for the punching force compared with a solid sealing piece, and the hollow structure can allow full utilization of a pressure produced by the interference fit, even more advantageous for pressing the sealing piece fully and evenly into the infusion hole tightly. Especially the bottom has the spherical structure, which makes the punching operation easier. 3) The present invention adopts the pole-type sealing piece with the cap (flat head or camber form), and thus has such advantages as easy manufacture and stabile sealing. 4) The counterbore is adopted for the infusion hole, and the concave at its countersunk head makes a limit flange of the sealing piece not easy to be disturbed by other parts in follow-up processes of the battery assembly, ensuring the sealing reliability. 5) The flange and the countersunk head are tightly fitted, which enables it and the sealing piece located in the infusion hole to play a dual lock function together, thus ensuring a tight joint between the sealing piece and the infusion hole; especially for a case where a bracing part has a hollow structure, an outward elastic force of the hollow part will be increased while the flange is tightly locked, and this elastic force is perpendicular to the joint surface between the sealing piece and the infusion hole, enabling effective enhancement of tightness of the sealing piece.

The present invention will be further described below in detail through embodiments in combination with drawings.

### BRIEF DESCRIPTION OF THE DRAWINGS

Figure 1 shows a cover plate for a lithium ion battery.
Figure 2 is a stereoscopic drawing of a sealing piece.
Figure 3 is an axial sectional view of the sealing piece.
Figure 4 is an axial sectional view of an infusion hole.
Figure 5 is an axial sectional view of another sealing piece.
Figure 6 is a schematic view of a case of a square lithium ion battery.

### DETAILED DESCRIPTION OF THE EMBODIMENTS

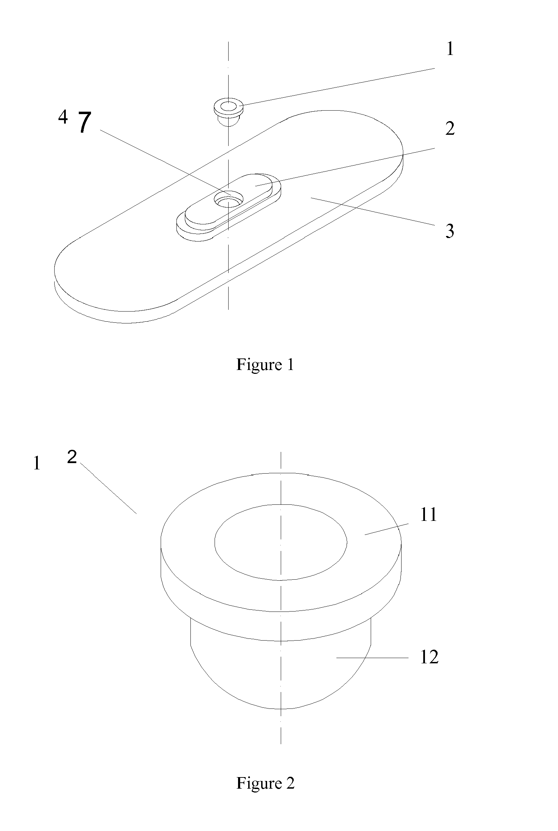

Embodiment 1: A cover plate for a lithium ion battery, as shown in Figures 1 to 4, includes a cover body and a sealing piece 1. The cover body includes a pole plate 2 and a cover face 3. An infusion hole 4 is provided on the pole plate 2 and the cover face 3.

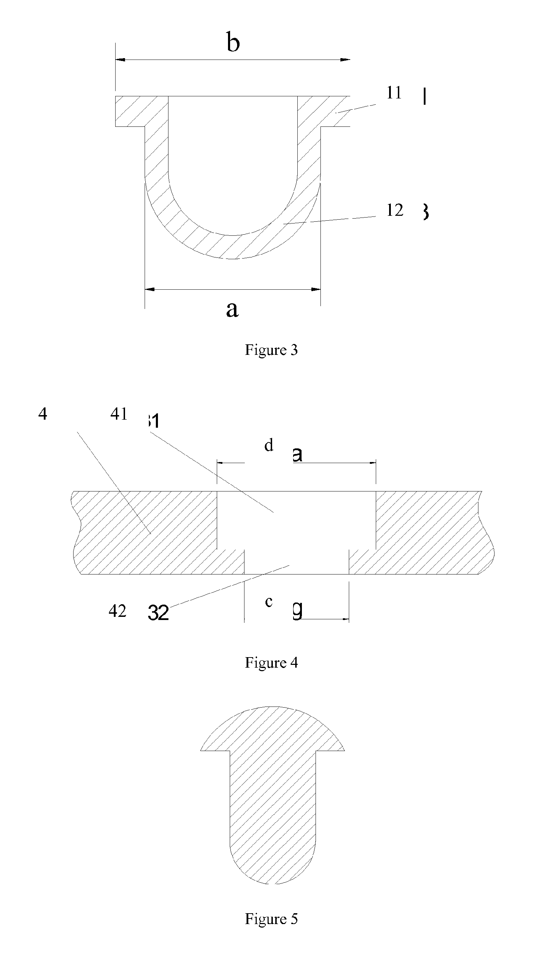

The sealing piece 1 has a structure as shown in Figures 2 and 3, which is a hollow structure with a closed spherical bottom and an open end all extending outward to form a sealing ring 11 as a flange. External diameter of its hollow part 12 is a, while external diameter of the sealing ring 11 is b.

The infusion hole 4 has a counterbore type structure as shown in Figure 4, and includes a straight hole 42 at the lower part and a countersunk head 41 at the upper part. Internal diameter of the straight hole 42 is c, while internal diameter of the countersunk head 41 is d.

The external diameter a of the hollow part 12 of the sealing piece 1 is bigger than the internal diameter c of the straight hole 42 of the infusion hole 4; and the external diameter of the sealing ring 11 is b that is bigger than the internal diameter d of the countersunk head 41. Therefore, the sealing piece 1 is locked tightly in the infusion hole 4 to get it sealed.

In the above-mentioned embodiment, the main purpose for the infusion hole to be provided with the countersunk head is for containing the flange of the sealing piece, and therefore other forms can also be adopted, e.g. a countersunk head with an inclined plane, as long as the infusion hole has a concave that can contain the flange. In addition, the sealing effect can further be enhanced if the flange is tightly fitted with the countersunk head. Certainly, it is also acceptable if the infusion hole just adopts a current common straight hole or inclined straight hole, which will simply not have the above-mentioned advantages.

The main function of the flange on the sealing piece is to act as a limit part during the punching process, so as to control depth of the sealing piece into the infusion hole. Therefore, there is no limit to its form and quantity. One skilled in the art can understand according to the present invention that, in addition to being the sealing ring, the flange can also be two or more convexes symmetrically or asymmetrically positioned at sides of the sealing piece, but must be located on the same horizontal plane, so as to limit a position accurately.

The part of the sealing piece located in the infusion hole can also have different forms and structures, as long as the infusion hole can be sealed. Compared with a common solid steel ball, the hollow structure in this embodiment can have a lower need for the punching force and a better effect. This solid sealing piece can also have a bolt structure, i.e. having a cap flange on the solid pole body, as shown in Figure 5. If the flange extends from the infusion hole (in a case where the infusion hole is not provided with the countersunk head), it had better have a gentle transition to surface of the cover body, thus avoiding as far as possible an influence from other parts in follow-up processes. If the flange is located in the countersunk head, it had better fit tightly with the countersunk head, so as to provide a better sealing effect; this structure is especially preferred.

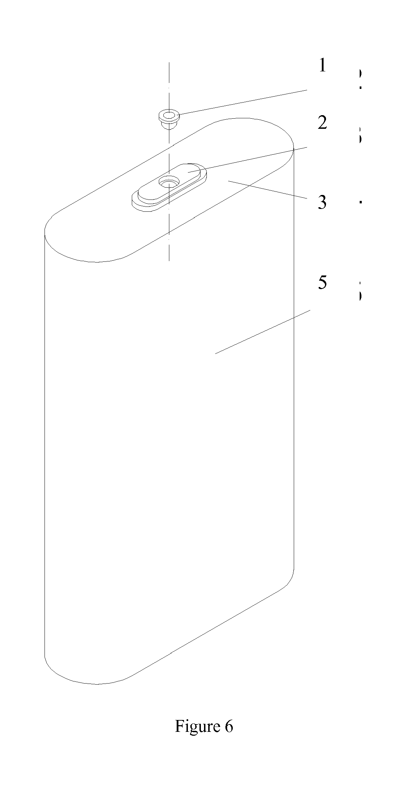

Embodiment 2: A case fo r a lithium ion battery, as shown in Figure 6, includes a battery bottle 5 and a battery cover plate assembly for sealing its opening. The battery cover plate assembly has the structure as described in Embodiment 1.

Embodiment 3: A lithium ion battery includes a lithium ion battery case and a battery electrical core sealed therein. The battery case has the structure as described in Embodiment 2.

It should be understood that, pole plate and cover face of the cover plate of the lithium ion battery of the present invention can also be designed into other forms, such as a circle, and the corresponding lithium ion battery case body and lithium ion battery into a cylinder, etc. The above description of the preferred embodiments is provided only for a better comprehension of the present invention, and cannot therefore be comprehended as a restriction to the extent of patent protection of the present invention. Its extent of patent protection should be as described in the enclosed claims.

## Claims

1. A cover plate for a lithium ion battery, the cover plate comprising:
a cover body and a sealing piece, the cover body being provided with an infusion hole, at least part of the sealing piece being located inside the infusion hole and fitted tightly with the infusion hole for sealing it;
wherein the sealing piece has a flange, which extends outside the infusion hole and limits depth of the sealing piece into the infusion hole.

2. The cover plate of the lithium ion battery according to claim 1, wherein the sealing piece has a hollow structure with a closed bottom.

3. The cover plate of the lithium ion battery according to claim 2, wherein the sealing piece has an open top structure, and the flange located on circumference of the open top of the sealing piece is a sealing ring all extending outward along the circumference.

4. The cover plate of the lithium ion battery according to claim 2, wherein the sealing piece has a spherical bottom structure.

5. The cover plate of the lithium ion battery according to claim 1, wherein the flange is at least two convexes, which are positioned at sides of the sealing piece symmetrically or asymmetrically and on the same horizontal plane.

6. The cover plate of the lithium ion battery according to claim 1, wherein the sealing piece has a solid pole form, and the flange is a cap located on its top.

7. The cover plate of the lithium ion battery according to claim 6, wherein the cap has either a camber or a flat structure.

8. The cover plate of the lithium ion battery according to any of claims 1 to 7, wherein the infusion hole is of a counterbore type and includes a straight hole at the lower part and a countersunk head at the upper part, the lower part of the sealing piece being located in the straight hole and its flange in the countersunk head.

9. The cover plate of the lithium ion battery according to claim 8, wherein the flange has an exterior circumference whose diameter is bigger than internal diameter of the countersunk head, and is tightly locked in the countersunk head.

10. A case of the lithium ion battery, the case comprising:
a battery bottle and the battery cover plate for sealing its opening, the battery cover plate including the cover body and the sealing piece, the cover body being provided with the infusion hole, at least part of the sealing piece being located inside the infusion hole and fitted tightly with the infusion hole for sealing it;
wherein the sealing piece has the flange, which extends outside the infusion hole and limits depth of the sealing piece into the infusion hole.

11. The case of the lithium ion battery according to claim 10, wherein the sealing piece has the hollow structure with the closed bottom and the open top, the flange located on circumference of the open top of the sealing piece being the sealing ring all extending outward along the circumference.

12. The case of the lithium ion battery according to claim 11, wherein the flange is at least the two convexes, which are positioned at sides of the sealing piece symmetrically or asymmetrically and on the same horizontal plane.

13. The case of the lithium ion battery according to claim 10, wherein the sealing piece has the solid pole form, and the flange is the cap located on its top.

14. The case of the lithium ion battery according to claim 13, wherein the infusion hole is of the counterbore type, and includes the straight hole at the lower part and the countersunk head at the upper part, the lower part of the sealing piece being located in the straight hole and its flange in the countersunk head.

15. A lithium ion battery, comprising:
the battery cover plate, the battery cover plate including the cover body and the sealing piece, the cover body being provided with the infusion hole, at least part of the sealing piece being located inside the infusion hole and fitted tightly with the infusion hole for sealing it;
wherein the sealing piece has the flange, which extends outside the infusion hole and limits depth of the sealing piece into the infusion hole.

16. The lithium ion battery according to claim 15, wherein the sealing piece has the hollow structure with the closed bottom and the open top, the flange located on circumference of the open top of the sealing piece being the sealing ring all extending outward along the circumference.

17. The lithium ion battery according to claim 16, wherein the sealing piece has a spherical bottom structure.

18. The lithium ion battery according to claim 15, wherein the flange is at least the two convexes, which are positioned at sides of the sealing piece symmetrically or asymmetrically and on the same horizontal plane.

19. The lithium ion battery according to claim 15, wherein the sealing piece has the solid pole form, and the flange is the cap located on its top.

20. The lithium ion battery according to claim 19, wherein the infusion hole is of the counterbore type, and includes the straight hole at the lower part and the countersunk head at the upper part, the lower part of the sealing piece being located in the straight hole and its flange in the countersunk head.
